# EUROPEAN PATENT SPECIFICATION

(11) **EP 3 186 096 B1**
(45) Date of publication and mention of the grant of the patent: **02.10.2019**
(21) Application number: 14766310.8
(22) Date of filing: 29.08.2014
(51) Int. Cl.: B60C 9/20

(54) **IMPROVED TIRE BELT CONSTRUCTION**
REIFEN MIT VERBESSERTEM GÜRTELAUFBAU
CONSTRUCTION D'UNE BANDE DE PNEUMATIQUE AMÉLIORÉE

(43) Date of publication of application: 05.07.2017
(73) Proprietor: Compagnie Générale des Etablissements Michelin, 63000 Clermont-Ferrand (FR)
(72) Inventor: DOWNEY, William A., Greenville, South Carolina 29605 (US); GANNON, Brian P., Greenville, South Carolina 29605 (US)
(74) Representative: Casalonga
(86) International application number: PCT/US2014/053465
(87) International publication number: WO 2016/032520

(56) References cited:
- EP-A1- 3 135 503
- EP-A2- 0 477 771
- GB-A- 1 346 006
- JP-A- 2000 153 702
- US-B1- 6 668 889

## Description

### BACKGROUND OF THE INVENTION

### Field of the Invention

This invention relates generally to pneumatic tires and methods for forming such tires, the tires having a belt comprised of at least three belt layers.

In particular, the present invention relates to a tire according to the preamble of independent claim 1 and a method according to the preamble of independent claim 4, such as they are for example known from EP 0 477 771 A2.

Another is known from US 6,68,889 B1 which discloses a pneumatic tire with a reinforcement package comprising a plurality of belts or breakers disposed between the tread and the carcass, wherein the reinforcement package has at least one lower belt, at least one upper belt and at least one middle reinforcement ply, wherein the upper and lower belts have reinforcing cords having alternating opposing angles of 15° to 38° with respect to the EP of the tire, wherein the at least one mid-ply belt comprising a belt wherein the reinforcement therein is discontinuous and is disposed at 0° to 5° with respect to the EP of the tire and wherein the upper belts have a width larger than the lower belts.

Other tires are known from EP 3 135 503 A1 or JP 2000 153702 A.

### Description of the Related Art

Pneumatic tires generally include a tire carcass and a belt arranged abqut the tire carcass. In certain instances, the belt is formed of three stacked belt layers, where each layer includes a plurality of spaced-apart, elongate reinforcements. Commonly, with tires having three (or 4 or more) belt layers, the middle belt layer is arranged such that the elongate reinforcements of the middle belt layer are arranged at a substantially zero angle relative a widthwise centerline or an equatorial plane of the tire. Because the reinforcements of the middle belt ply are arranged at a zero angle, the reinforcements extend longitudinally in a circumferential direction of the belt or tire to provide an elevated circumferential or hoop strength for the belt and tire. Unfortunately, this substantially prevents the belt from stretching or expanding during methods of forming a tire, including curing tires during molding operations. Additionally, because the belt does not substantially expand, the belt is commonly assembled separate from the tire carcass, and later, after belt assembly, applied to the tire carcass to form an assembled, uncured tire. These and other issues are overcome by the invention described herein.

### SUMMARY OF THE INVENTION

Embodiments of the invention include a pneumatic tire and methods for forming a pneumatic tire.

In particular embodiments of the invention, a cured pneumatic tire is provided comprising a tire carcass having one or more body layers extending between a pair of beads spaced apart in an axial direction of the tire. In such embodiments, the cured pneumatic tire also includes a belt arranged along the tire carcass between the pair of beads, the belt having three belt layers comprising a second belt layer arranged between a first belt layer and a third belt layer. Each of the three belt layers have a length extending in a circumferential direction of the tire and a width extending in the axial direction of the tire, each of the three belt layers including a plurality of elongate reinforcements spaced apart at least partially across the width of the respective belt layer and having a reinforcement length extending at least partially in the direction of the length of the respective belt layer. The length of each reinforcement in the first layer extends in a direction biased from an equatorial plane of the tire by an angle greater or less than zero, the length of each reinforcement in the second layer extends in a direction biased from an equatorial plane of the tire by an angle having an absolute value of 5 to 15 degrees, and the length of each reinforcement in the third layer extends in a direction biased from an equatorial plane of the tire by an angle greater or less than zero.

Particular embodiments of the present invention also include a method of forming a cured pneumatic tire, which includes a step of providing a tire carcass having one or more body layers extending between a pair of beads spaced apart in an axial direction of the tire. An additional step includes arranging a belt along a central portion of the tire carcass between the pair of beads, the belt having three belt layers comprising a second belt layer arranged between a first belt layer and a third belt layer, each of the three belt layers having a length extending in a circumferential direction of the tire and a width extending in the axial direction of the tire, each of the three belt layers including a plurality of elongate reinforcements spaced apart at least partially across the width of the respective belt layer and having a reinforcement length extending at least partially in the direction of the length of the respective belt layer. Yet a further step includes curing the belt to the tire carcass to form a cured tire, where the length of each reinforcement in the first layer extends in a direction biased from an equatorial plane of the tire by an angle greater or less than zero, the length of each reinforcement in the second layer extends in a direction biased from an equatorial plane of the tire by an angle having an absolute value of 5 to 15 degrees, and the length of each reinforcement in the third layer extends in a direction biased from an equatorial plane of the tire by an angle greater or less than zero.

Additional embodiments are described below.

### DETAILED DESCRIPTION OF THE DRAWINGS

FIG. **1** is a front sectional view of a tire, in accordance with an embodiment of the invention.
FIG **2** is a partial top view of a belt of the tire of FIG. **1**, showing three belt layers, in accordance with an embodiment of the invention.
FIG. **3** is a front sectional view of the tire being formed, where the belt is being applied and assembled on a tire carcass, in accordance with an embodiment of the invention.

### DETAILED DESCRIPTION OF PARTICULAR EMBODIMENTS

Embodiments of the invention include cured pneumatic tires and methods for forming such tires, the tires having a belt comprised of at least three belt layers, where three belt layers are arranged such that the middle belt layer, which is also referred to a second belt layer herein, has elongate reinforcements, such as cords or the like, biased by a non-zero angle from an equatorial plane of the belt or tire.

Commonly, with tires having three belt layers, the middle belt layer is arranged such that the elongate reinforcements of the middle belt layer are arranged at a substantially zero angle relative a widthwise centerline or an equatorial plane of the tire. Because the reinforcements of the middle belt ply are arranged at a zero angle, the reinforcements extend longitudinally in a circumferential direction of the belt or tire, which substantially prevents the belt from stretching or expanding during methods of tire curing, such as during molding operations. This is especially the case when the middle belt ply includes high strength, low elongation reinforcements, such as those used in truck tires. Therefore, because the belt does not substantially expand, the belt is commonly assembled separate from the tire carcass, and later, after belt assembly, applied to the tire carcass to form an assembled, uncured tire. Subsequently, the assembled, uncured tire is inserted into a mold and cured to form a cured tire. The invention described herein in accordance with various embodiments, provides various benefits, including eliminating the need to assemble a belt separate from the tire carcass, which eliminates certain complexities and additional time of prior methods for assembling an uncured pneumatic tire. While the invention provides belts that may be employed by any pneumatic tire, in particular embodiments, the cured pneumatic tires comprise truck and trailer tires or construction vehicle tires, where each such vehicle may be used for over-the-road or off-road purposes and may be configured to carry cargo or pull trailers carrying cargo or haul heavy machinery. Semi trucks, fire trucks, and ambulances are considered to be trucks for this purpose.

Accordingly, particular embodiments of the invention include a method of forming a cured pneumatic tire. In such methods, one step includes providing a tire carcass having one or more body layers extending between a pair of beads spaced apart in an axial direction of the tire. In such embodiments, the tire carcass is generally uncured, which is often referred to as being "green" within the industry, whereby the various components assembled to form the tire carcass are not permanently bonded together, and remain at least partially unbonded or separable while awaiting the addition of additional components to form an assembled tire, such as a belt and tire tread, for example. In a most basic form, the tire carcass includes at least one body layer extending between a pair of beads. The beads, each forming an annulus or ring, are spaced apart in an axial direction of the tire or tire carcass (that is, in other words, in a direction of the tire width). Each of the beads form an annulus or ring, and may comprise any bead desired or known to one of ordinary skill. The body layer comprises any material employed for such purpose, as known to one of ordinary skill. In particular embodiments, for example, the body layer comprises a composite sheet of material comprising a plurality of elongate reinforcements arranged within an elastomeric polymer matrix. In particular embodiments, the elastomeric polymer is a natural or synthetic rubber. Each of the reinforcements may comprise any cord known to one of ordinary skill. For example, such cords may be formed of metal (most commonly steel) or any fabric or textile, such as polyester, rayon, nylon, aramid, or fiberglass. Such cords may be formed of a plurality of wire (metal) or yarn/filaments (fabric/textile), arranged lengthwise and twisted along their lengths as desired.

Particular embodiments of the method of forming a cured pneumatic tire include a step of arranging a belt along a central portion of the tire carcass between the pair of beads. The belt has three belt layers, which are stacked, comprising a second belt layer arranged between a first belt layer and a third belt layer. Each of the three belt layers have a length extending in a circumferential direction of the tire and a width extending in the axial direction of the tire. Each of the three belt layers include a plurality of elongate reinforcements spaced apart at least partially across the width of the respective belt layer. Each of the plurality of elongate reinforcements also have a reinforcement length extending at least partially in the direction of the length of the respective belt layer. In arranging the belt along a central portion of the tire carcass, it is appreciated that the central portion consists of any portion of the tire carcass located between the pair of beads. For example, in more specific instances, the belt is arranged relative the central portion of the tire carcass such that a widthwise centerline of the belt extending lengthwise in a direction of the belt length (stated differently, in a circumferential direction of the belt) at the center of the belt width is arranged at the equator of the tire carcass (that is, at the widthwise centerline of the tire carcass between the pair of beads). It is also appreciated that the belt, which forms an annulus or ring, cannot significantly expand radially or circumferentially. Therefore, during the step of arranging a belt along a central portion of the tire carcass, the central portion is in an expanded state, such that the belt is formed a greater distance from the rotational axis of the tire, that is, at a distance that is much closer to its final, cured location. In an expanded state, the central portion has a perimeter, diameter, circumference, or perimeter that is greater than that of each bead of the pair of beads or portions of the body layer arranged adjacent to any such bead.

In particular instances, the belt is formed or assembled along the tire carcass by first applying the first belt layer to the tire carcass, then subsequently applying the second belt layer and then the third belt layer. While the first belt layer may be applied directly to the tire carcass, the second belt layer applied directly overtop the first belt layer, and the third belt layer applied directly overtop the second belt layer, it is appreciated that a thin layer of adhesive or bonding agent may be applied before the application of any belt layer without deviating from the invention. The layer of adhesive or bonding agent may comprise uncured elastomeric polymer, such as natural or synthetic rubber, or any other solid, liquid, or viscous material to facilitate sufficient bonding known to one of ordinary skill. In particular embodiments, the layer of adhesive or bonding agent is unreinforced, meaning that no elongate reinforcement is arranged within the layer, although other reinforcements may be employed in other embodiments. The thickness of the thin layer is generally less than the thickness of any such belt layer.

It is appreciated that each belt layer comprises a composite sheet of material comprising a plurality of elongate reinforcements arranged within an elastomeric polymer matrix. In particular embodiments, the elastomeric polymer is a natural or synthetic rubber. Each of the reinforcements may comprise any cord known to one of ordinary skill. For example, such cords may be formed of metal (most commonly steel) or any fabric or textile, such as polyester, rayon, nylon, aramid, or fiberglass. Such cords may be formed of a plurality of wire (metal) or yarn/filaments (fabric/textile), arranged lengthwise and twisted along their lengths as desired. For each belt layer, each reinforcement has a length extending at least partially in a direction of the belt layer length, which, when applied to the tire carcass, extend at least partially in a circumferential direction of the tire carcass. While it is noted that the belt includes three belt layers, it is appreciated that in different embodiments the belt comprises only three belt layers while in other embodiments more than three belt layers are provided.

To ensure substantially all of the air or any other gases are evacuated and not trapped between belt layers, in particular embodiments, each of the three belt layers are forcibly applied, or after application a force is directionally applied to direct any air or other gas to a side edge each belt layer. This is referred to as "stitching" within the industry. Stitching may occur during application of a belt layer, after each belt layer is applied, or after all of the belt layers have been applied to form the belt. Whether due to forcible application of each belt layer, or due to the performance of stitching operations, in particular embodiments, the belt, and therefore each belt layer, is substantially applied to the tire carcass such that the belt and each belt layer is adapted to a contoured shape of the tire carcass central portion.

Upon completion of the step of arranging a belt along a tire carcass, the belt is an uncured or "green" belt. To complete the tire, additional components may be applied subsequent to application of the belt, such as applying a tire tread overtop the belt.

Once the uncured tire is assembled, particular embodiments of the method of forming a cured pneumatic tire further include a step of curing the belt to the tire carcass to form a cured tire. Curing may be achieved by any method known to one of ordinary skill in the art. For example, in particular embodiments, the assembled tire is placed within a mold, where elevated pressure and heat is applied to the tire to form and cure the assembled tire into a cured pneumatic tire. In any event, regardless of the method employed to cure the tire, in the cured tire: (1) the length of each reinforcement in the first belt layer extends in a direction biased relative to an equatorial plane of the belt or tire by an angle greater than or less than zero degrees (that is, in other words, by an angle having an absolute value greater than zero); (2) the length of each reinforcement in the second belt layer extends in a direction biased relative to an equatorial plane of the belt or tire by an angle substantially greater than or less than zero degrees (that is, in other words, by an angle having an absolute value substantially greater than zero); and, (3) the length of each reinforcement in the third belt layer extends in a direction biased relative to an equatorial plane of the belt or tire by an angle greater than or less than zero degrees. In more particular embodiments, for each of the first and third belt layers, the length of each reinforcement extends in a direction biased relative to an equatorial plane of the belt or tire by an angle having an absolute value of 18 to 30 degrees, or, in more specific embodiments 24 to 28 degrees. In any such embodiment, the length of each reinforcement in the second belt layer extends in a direction biased relative to an equatorial plane of the belt or tire by an angle having an absolute value substantially greater than zero, or, in more specific embodiments an absolute value of 5 degrees or more, and in even more specific embodiments 7 to 15 degrees or substantially 10 degrees. In any such embodiment, the reinforcement angle for the first belt layer is a positive value while the reinforcement angle for the third belt layer is a negative value, or vice versa, whether or not the absolute values for the reinforcement angles for the first and third belt layers are equal in absolute value.

In the cured tire, each of the belt layers have a width, which is referred to as a cured width, extending in the axial direction of the tire or belt. While the cured width of the belt and belt layers will vary depending upon the width of the tire being constructed, in particular embodiments there are differences in the width between the three belt layers. Specifically, in certain embodiments, the third belt layer, which is the outer belt layer of the three belt layers, has a width that is greater than the width of each of the first and second belt layers, which are referred to as the inner and the middle belt layers, respectively, of the three belt layers. In such certain embodiments, the width of the second belt layer is narrower than both the first and third belt layers. For example, in certain instances, the first and third belt layers are arranged such that each widthwise side edge of each respective belt layer extends at least 10 millimeters (mm) beyond a widthwise side edge of the second belt layer. In more specific embodiments, the width of the first layer extends at least 10 mm beyond the widthwise side edge of the second belt layer, and the third belt layer extends at least 20 mm beyond the widthwise side edge of the second belt layer.

The methods discussed above, and the cured tires formed by such methods, will now be discussed below in association with particular embodiments shown in the figures.

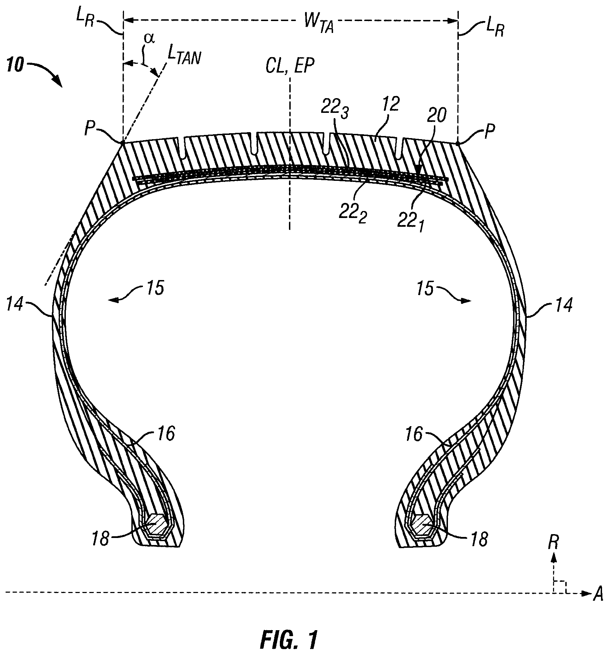

With reference to FIG. **1**, a cross-sectional view of a cured, pneumatic tire **10** is shown in accordance with an embodiment of the invention, relative to a rotational axis **A** defining an axial direction of the tire, the radial direction **R** of the tire extending perpendicular to the rotational axis. The tire **10** includes a tread **12** arranged overtop a belt **20**, all of which is bonded to a tire carcass **15**. The tire includes a pair sidewalls **14** spaced apart in an axial direction of the tire, and a pair of beads **18** spaced apart in an axial direction of the tire. The axial direction of the tire is also a direction of the tire width, and a direction of the belt width and belt layer width. As part of the tire carcass **15**, a body layer **16** extends between the pair of beads **18**. A widthwise centerline **CL** is shown defining an equator extending around a perimeter of the tire **10**. An equatorial plane **EP** extends through the tire **10** along the centerline **CL**.

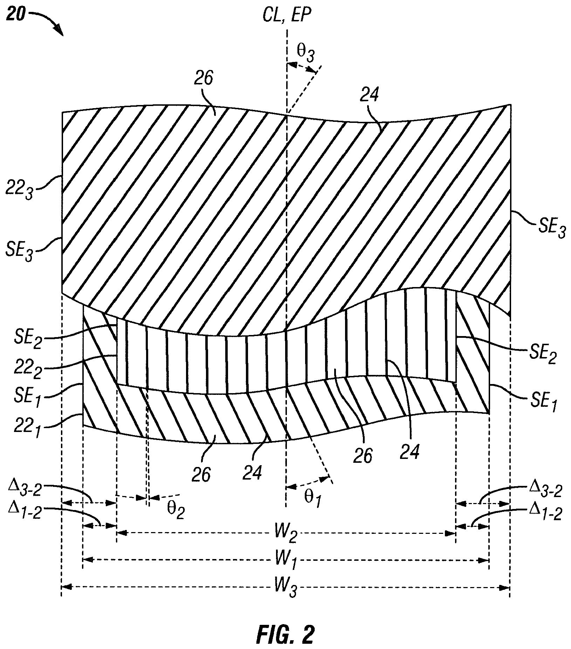

In FIG. **2**, a top cutaway view of the belt **20** of FIG. **1** is shown, showing the three belt layers forming the belt. In particular, the three belt layers **22** comprise a first or inner belt layer **22₁**, a second or middle belt layer **22₂**, and a third or outer belt layer **22₃**. Each of the three belt layers form a sheet and include a plurality of reinforcements **24** arranged within a elastomeric polymer matrix **26**. The reinforcements **24** in the second belt layer **22₂** are arranged at an angle **θ₂** relative to the widthwise centerline **CL** of the tire or belt, or relative to the equatorial plane **EP**, where angle **θ₂** is greater or less than zero degrees, that is, an angle that is non-zero. Likewise, the reinforcements **24** in each of the first and third belt layers **22₁**, **22₃** are arranged at a corresponding angle **θ₁**, **θ₃** relative to the widthwise centerline **CL** of the tire or belt, or relative to the equatorial plane **EP**, where the angle **θ₁**, **θ₃** is greater or less than zero degrees, that is, an angle that is non-zero. In the embodiment shown, while the absolute values for each of the first and third reinforcement angles **θ₁**, **θ₃** are equal, the reinforcement angle **θ₁** for the first layer **22₁** is a positive value while the reinforcement angle **θ₃** for the third layer **22₃** is a negative value, or vice versa if using an alternative reference. In other variations, the absolute values for each of the first and third reinforcement angles **θ₁**, **θ₃** may not be equal (that is, may not be unequal or are different).

As noted above, in particular exemplary embodiments, for each of the first and third belt layers **22₁**, **22₃**, the length of each reinforcement **24** extends in a direction biased relative to equatorial plane **EP** by a corresponding angle **θ₁**, **θ₃** having an absolute value of 18 to 30 degrees, or in more specific embodiments 24 to 28 degrees. In any such embodiment, the length of each reinforcement **24** in the second belt layer **22₂** extends in a direction biased relative to an equatorial plane of the belt or tire by an angle **θ₂** having an absolute value substantially greater than zero, or, in more specific embodiments an absolute value of 5 to 15 degrees, and in even more specific embodiments 7 to 15 degrees or substantially 10 degrees. More generally, in certain embodiments, angle **θ₂** is less than angles **θ₁**, **θ₃**, where second belt layer **22₂** is a low angle reinforcement belt layer with angle **θ₂** being a low angle measuring 5 to 15 degrees in absolute, such as 7 to 15 degrees or substantially 10 degrees a noted above. In other embodiments, for the three belt layers, it is understood that the first or third belt layer may be the low angle reinforcement belt layer, in lieu of the second belt layer. By employing these reinforcement angles, a compromise is met between maintaining a desired elevated level of circumferential hoop strength and allowing a tire to be more efficiently formed whereby the belt is formed directly onto the tire carcass in lieu of forming the belt separate from the tire carcass, where the belt is later applied in whole to the tire carcass. By employing a reinforcement angle of at least 5 degrees, each reinforcement will not extend completely around the circumference of the tire without terminating along a side edge of the respective belt layer, for belt layers of certain widths. By also ensuring a reinforcement angle does not extend substantially beyond 15 degrees, the desired elevated hoop strength of the belt is maintained while also allowing the belt to sufficiently expand during tire formation and/or after the uncured tire is placed within a mold.

Because reinforcement angle **θ₂** in the second belt layer **22₂** is non-zero, or, more generally, because none of the three belt layers **22₁**, **22₂**, **22₃** have reinforcements **24** extending longitudinally along a reinforcement angle **θ₁**, **θ₂**, **θ₃** equal to zero (that is, all are non-zero), the belt is able to expand as needed to allow the belt to be assembled and built directly onto the tire carcass, without having to assemble and build the belt separately from the tire carcass, such as on a different building drum or other platform. And because reinforcement angle **θ₂** in the second belt layer **22₂** is a low angle somewhere from 5 to 15 degrees (as discussed above in different embodiments), or, more generally, because at least one of the three belt layers **22₁**, **22₂**, **22₃** have reinforcements **24** extending longitudinally along a low angle reinforcement angle **θ₁**, **θ₂**, **θ₃** somewhere from 5 to 15 degrees, the belt **20** has a strength closely similar to a belt having a belt layer characterized as having reinforcements arranged at a zero degree relative to widthwise centerline **CL** or equatorial plane **EP**. Accordingly, by having a low angle reinforcement belt layer, the belt can be built on a tire carcass while also maintaining circumferential strength of the belt. In embodiments where the low angle reinforcement belt layer is the second belt layer, the low angle reinforcement belt layer distribute circumferential forces to the neighboring belt layers, namely, the first and third belt layers, which increases and optimizes the circumferential strength of the belt in total.

Because the belt is configured to expand when placed under tension as the tire pressurized during a curing process, such as when the tire is molded, the angles of the reinforcements decrease as the belt expands between an uncured and cured state of the tire. Therefore, the angle of the reinforcements in each of the three belt layers when applied to the tire carcass are greater than the angles of the reinforcements in each of the three belt layers in the cured tire. Because the amount of expansion may vary from curing process to curing process, such as when different molds are used, the requisite angle of the reinforcements in the uncured tire will vary as is known to one of ordinary skill in the art. Accordingly, one of ordinary skill in the art will know, without undue experimentation, how to select an angle of the reinforcement for each of the three belt layers as applied to the tire carcass for the purpose of achieving the desired angles of the reinforcements in each of the three belt layers in the cured tire.

With continued reference to FIG. **2**, cured widths of the three belt layers of cured, pneumatic tire **10** are shown. In particular, first belt layer **22₁** has a width **W₁**, second belt layer **22₂** has a width **W₂**, and third belt layer **22₃** has a width **W₃**. In the embodiment shown, third belt layer **22₃** has a width **W₃** that is greater than the width **W₁**, **W₂** of each of the first and second belt layers **22₁**, **22₂**. It is also shown that width **W₂** of the second belt layer **22₂** is narrower than the width **W₁**, **W₃** both the first and third belt layers. The three belt layers can also be described such that the first belt layer **22₁** is arranged such that each widthwise side edge **SE₁** of the first belt layer **22₁** extends by a distance **Δ₁₋₂** at least 10 millimeters (mm) beyond a widthwise side edge **SE₂** of the second belt layer **22₂**, and the widthwise side edge **SE₃** of the third belt layer **22₃** extends a distance **Δ₃₋₂** at least 20 mm beyond the widthwise side edge **SE₂** of the second belt layer.

With continued reference to FIG. **2**, the widths of the belt layers **22₁**, **22₂**, **22₃** may each be expressed as a percentage of a width of the tread **12.** In particular embodiments, the width of the tread **12** can be effectively referred to as a width or a tread arc. The tread arc width **W_{TA}** is defined to extend between locations **P** arranged on opposing sides of centerline **CL** along the tread width, where at each location **P** a tangent line **L_{TAN}** extends by an angle **α** substantially equal to 20 degrees in a direction toward centerline **CL** from a radial reference line **L_{R}.** In other words, at each location **P**, tangent line **L_{TAN}** intersects the radial reference line **L_{R}.** It is appreciated that radial reference line **L_{R}** extends in a radial direction **R** of the tire, and parallel to centerline **CL** and therefore perpendicular to the axial direction **A** of the tire, while tangent line **L_{TAN}** is arranged tangent to the tread or tread arc, where the tangent line extends along a plane defined radial direction **R** and axial direction **A** of the tire (in other words, the tangent line is formed of two vectors, one extending in the radial direction and the other in the axial direction). In particular embodiments, the third layer width **W₃** is substantially equal to or less than 85 percent (85%) of the tread arc width **W_{TA}**, and where the second layer width **W₂** is substantially equal to or less than 80 percent (80%) of the third layer width and the first layer width **W₁** is substantially equal to 95 to 105 percent (95-105%) of the third layer width.

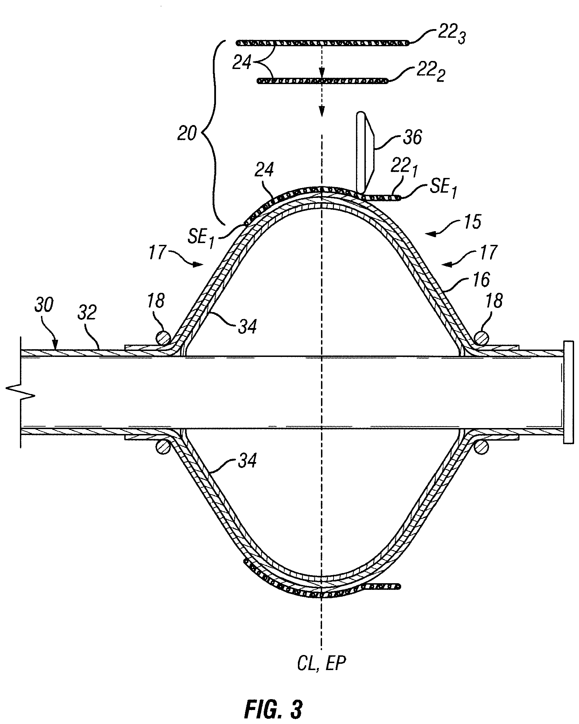

With reference to FIG. **3**, an uncured tire carcass **15** is shown along a building platform comprising a building drum **30**, where a central portion **17** of the tire carcass is in an expanded state with a belt **20** being assembled or built thereon. By way of example, one manner employed to achieve this, a sleeve **32** is expanded with a pneumatic bladder **34**. First belt layer **22₁** is shown applied to central portion **17** of the tire carcass **15**. Subsequently, the second belt layer **22₂** is awaiting application overtop the first belt layer **22₁** with third belt layer **22₃** being arranged overtop the second belt layer. A stitching wheel **36** is shown directionally applying forces to the first belt layer **22₁** to direct air or other gases out a side edge **SE₁** of the first belt layer. In this embodiment, each of the three belt layers are applied and then stitched prior to application of a subsequent belt layer to remove any air or gas trapped underneath each such belt layer.

The terms "comprising," "including," and "having," as used in the claims and specification herein, shall be considered as indicating an open group that may include other elements not specified. The terms "a," "an," and the singular forms of words shall be taken to include the plural form of the same words, such that the terms mean that one or more of something is provided. The terms "at least one" and "one or more" are used interchangeably. The term "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (*i.e.*, not required) feature of the invention. Ranges that are described as being "between a and b" are inclusive of the values for "a" and "b" unless otherwise specified.

While this invention has been described with reference to particular embodiments thereof, it shall be understood that such description is by way of illustration only and should not be construed as limiting the scope of the claimed invention. Accordingly, the scope and content of the invention are to be defined only by the terms of the following claims. Furthermore, it is understood that the features of any specific embodiment discussed herein may be combined with one or more features of any one or more embodiments otherwise discussed or contemplated herein unless otherwise stated.

## Claims

1. A cured pneumatic tire (10) comprising:
a tire carcass (15) having one or more body layers (16) extending between a pair of beads (18) spaced apart in an axial direction (A) of the tire (10);
a belt arranged along the tire carcass (15) between the pair of beads (18), the belt (20) having three belt layers (22₁, 22₂, 22₃) comprising a second belt layer (22₂) arranged between a first belt layer (22₁) and a third belt layer (22₃), each of the three belt layers (22₁, 22₂, 22₃) having a length extending in a circumferential direction of the tire (10) and a width extending in the axial direction (A) of the tire (10), each of the three belt layers (22₁, 22₂, 22₃) including a plurality of elongate reinforcements (24) spaced apart at least partially across the width of the respective belt layer and having a reinforcement length extending at least partially in the direction of the length of the respective belt layer,
where the length of each reinforcement in the first belt layer (22₁) extends in a direction biased from an equatorial plane (EP) of the tire (10) by an angle (θ₁), the length of each reinforcement in the second belt layer (22₂) extends in a direction biased from an equatorial plane (EP) of the tire (10) by an angle (θ₂) having an absolute value of 5 to 15 degrees, and the length of each reinforcement in the third belt layer (22₃) extends in a direction biased from the equatorial plane (EP) of the tire (10) by an angle (θ₃),
the third belt layer (22₃) is arranged radially outward from each of the first belt layer (22₁) and the second belt layer (22₂), and the width (W₂) of the second belt layer (22₂) is less than the width (W₁) of the first belt layer (22₁) and the width (W₃) of the third belt layer (22₃),
**characterized in that**
said angle (θ₁) is equal to an absolute value of 24 to 28 degrees,
said angle (θ₃) is equal to an absolute value of 24 to 28 degrees,
and
the width (W₃) of the third belt layer (22₃) is greater than the width (W₁) of the first belt layer (22₁).

2. The tire (10) of claim 1, where the angle (θ₂) by which the length of each reinforcement in the second belt layer (22₂) extends from the equatorial plane (EP) of the tire (10) has an absolute value of 7 to 15 degrees.

3. The tire (10) of claim 1, where the angle (θ₂) by which the length of each reinforcement in the second belt layer (22₂) extends from the equatorial plane (EP) of the tire (10) has an absolute value equal to substantially 10 degrees.

4. A method of forming a cured pneumatic tire (10), the method comprising:
providing a tire carcass (15) having one or more body layers (16) extending between a pair of beads (18) spaced apart in an axial direction (A) of the tire (10);
arranging a belt (20) along a central portion (17) of the tire carcass (15) between the pair of beads (18), the belt (20) having three belt layers (22₁, 22₂, 22₃) comprising a second belt layer (22₂) arranged between a first belt layer (22₁) and a third belt layer (22₃), each of the three belt layers (22₁, 22₂, 22₃) having a length extending in a circumferential direction of the tire (10) and a width extending in the axial direction (A) of the tire (10), each of the three belt layers (22₁, 22₂, 22₃) including a plurality of elongate reinforcements (24) spaced apart at least partially across the width of the respective belt layer and having a reinforcement length extending at least partially in the direction of the length of the respective belt layer;
curing the belt (20) to the tire carcass (15) to form a cured tire (10), where in the cured tire (10), the length of each reinforcement in the first belt layer (22₁) extends in a direction biased from an equatorial plane (EP) of the tire (10) by an angle (θ₁), the length of each reinforcement in the second belt layer (22₂) extends in a direction biased from an equatorial plane (EP) of the tire (10) by an angle (θ₂) having an absolute value of 5 to 15 degrees, and the length of each reinforcement in the third belt layer (22₃) extends in a direction biased from the equatorial plane (EP) of the tire (10) by an angle (θ₃),
the third belt layer (22₃) is arranged radially outward from each of the first belt layer (22₁) and the second belt layer (22₂), and in the cured tire, the width (W₂) of the second belt layer (22₂) is less than the width (W₁) of the first belt layer (22₁) and the width (W₃) of the third belt layer (22₃),
**characterized in that**
said angle (θ₁) is equal to an absolute value of 24 to 28 degrees,
said angle (θ₃) is equal to an absolute value of 24 to 28 degrees, and
in the cured tire (10), the width (W₃) of the third belt layer (22₃) is greater than the width (W₁) of the first belt layer (22₁).

5. The method of claim 4, where the angle (θ₂) by which the length of each reinforcement in the second belt layer (22₂) extends from the equatorial plane (EP) of the tire (10) has an absolute value of 7 to 15 degrees.

6. The method of claim 5, where the angle (θ₂) by which the length of each reinforcement in the second belt layer (22₂) extends from the equatorial plane (EP) of the tire (10) has an absolute value equal to substantially 10 degrees.

7. The method of any one of claims 4 to 6,
where in the step of arranging the belt (20) along the tire carcass (15), the tire carcass (15) is in an expanded state, and
where the belt (20) is formed along the tire carcass (15) by first applying the first belt layer (22₁) to the tire carcass (15), then subsequently applying the second belt layer (22₂) and then the third belt layer (22₃).

8. The method of any one of claims 4 to 6, where in the step of arranging, the angle for each reinforcement in each of the three belt layers (22₁, 22₂, 22₃) is greater than the angle for each reinforcement in each of the three belt layers (22₁, 22₂, 22₃) in the cured tire (10).

9. The method of any one of claims 4 to 8, where each of the three belt layers (22₁, 22₂, 22₃) are stitched to a contoured shape of the central portion (17) of the tire carcass (15).

10. The method of claim 9, where in the step of providing, the tire carcass (15) is uncured, and where in the step of arranging, the belt (20) is uncured.

## Patentansprüche

1. Vulkanisierter pneumatischer Reifen (10), umfassend:
eine Reifenkarkasse (15), die eine oder mehr Unterbaulagen (16) hat, die sich zwischen einem Paar von Wülsten (18) erstrecken, die in einer axialen Richtung (A) des Reifens (10) mit Abstand angeordnet sind;
einen Gurt, der entlang der Reifenkarkasse (15) zwischen dem Paar von Wülsten (18) angeordnet ist, wobei der Gurt (20) drei Gurtlagen (22₁, 22₂, 22₃) hat, die eine zweite Gurtlage (22₂) umfassen, die zwischen einer ersten Gurtlage (22₁) und einer dritten Gurtlage (22₃) angeordnet ist, wobei jede der drei Gurtlagen (22₁, 22₂, 22₃) eine Länge hat, die sich in einer Umfangsrichtung des Reifens (10) erstreckt, und eine Breite, die sich in der axialen Richtung (A) des Reifens (10) erstreckt, wobei jede der drei Gurtlagen (22₁, 22₂, 22₃) eine Vielzahl von länglichen Verstärkungen (24) enthält, die mit Abstand zumindest teilweise über die Breite der jeweiligen Gurtlage angeordnet sind und eine Verstärkungslänge haben, die sich zumindest teilweise in der Richtung der Länge der jeweiligen Gurtklage erstreckt,
wobei die Länge jeder Verstärkung in der ersten Gurtlage (22₁) sich in einer Richtung erstreckt, die gegenüber einer äquatorialen Ebene (EP) des Reifens (10) um einen Winkel (θ₁) geneigt ist, die Länge jeder Verstärkung in der zweiten Gurtlage (22₂) erstreckt sich in einer Richtung, die gegenüber einer äquatorialen Ebene (EP) des Reifens (10) um einen Winkel (θ₂) geneigt ist, der einen absoluten Wert von 5 bis 15° hat, und die Länge jeder Verstärkung in der dritten Gurtlage (22₃) erstreckt sich in einer Richtung, die gegenüber der äquatorialen Ebene (EP) des Reifens (10) um einen Winkel (θ₃) geneigt ist,
die dritte Gurtlage (22₃) ist radial nach außen von jeder Lage aus der ersten Gurtlage (22₁) und der zweiten Gurtlage (22₂) angeordnet, und die Breite (W₂) der zweiten Gurtlage (22₂) ist kleiner als die Breite (W₁) der ersten Gurtlage (22₁) und die Breite (W₃) der dritten Gurtlage (22₃),
**dadurch gekennzeichnet, dass**
der Winkel (θ₁) gleich einem Absolutwert von 24 bis 28 Grad ist,
der Winkel (θ₃) gleich einem Absolutwert von 24 bis 28 Grad ist,
und
die Breite (W₃) der dritten Gurtlage (22₃) ist größer als die Breite (W₁) der ersten Gurtlage (22₁).

2. Reifen (10) nach Anspruch 1, wobei der Winkel (θ₂), um den sich die Länge jeder Verstärkung in der zweiten Gurtlage (22₂) gegenüber der äquatorialen Ebene (EP) des Reifens (10) erstreckt, einen Absolutwert von 7 bis 15 Grad hat.

3. Reifen (10) nach Anspruch 1, wobei der Winkel (θ₂), um den sich die Länge jeder Verstärkung in der zweiten Gurtlage (22₂) gegenüber der äquatorialen Ebene (EP) des Reifens (10) erstreckt, einen Absolutwert hat, der im Wesentlichen gleich 10 Grad ist.

4. Verfahren zum Bilden eines vulkanisierten pneumatischen Reifens (10), wobei das Verfahren umfasst:
Bereitstellen einer Reifenkarkasse (15), die eine oder mehr Unterbaulagen (16) hat, die sich zwischen einem Paar von Wülsten (18) erstrecken, welche mit Abstand in einer axialen Richtung (A) des Reifens (10) angeordnet sind;
Anordnen eines Gurtes (20) entlang eines zentralen Teils (17) der Reifenkarkasse (15) zwischen dem Paar von Wülsten (18), wobei der Gurt (20) drei Gurtlagen (22₁, 22₂, 22₃) hat, die eine zweite Gurtlage (22₂) umfassen, die zwischen einer ersten Gurtlage (22₁) und einer dritten Gurtlage (22₃) angeordnet ist, wobei jede der drei Gurtlagen (22₁, 22₂, 22₃) eine Länge hat, die sich in einer Umfangsrichtung des Reifens (10) erstreckt, und eine Breite, die sich in der axialen Richtung (A) des Reifens (10) erstreckt, wobei jede der drei Gurtlagen (22₁, 22₂, 22₃) eine Vielzahl von länglichen Verstärkungen (24) enthält, die zumindest teilweise über die Breite der jeweiligen Gurtlage mit Abstand angeordnet sind, und die eine Verstärkungslänge haben, die sich zumindest teilweise in Richtung der Länge der jeweiligen Gurtlage erstreckt;
Vulkanisieren des Gurtes (20) an der Reifenkarkasse (15), um einen vulkanisierten Reifen (10) zu bilden, wobei im vulkanisierten Reifen (10) die Länge jeder Verstärkung in der ersten Gurtlage (22₁) sich in einer Richtung erstreckt, die gegenüber einer äquatorialen Ebene (EP) des Reifens (10) um einen Winkel (θ₁) geneigt ist, die Länge jeder Verstärkung in der zweiten Gurtlage (22₂) erstreckt sich in einer Richtung, die gegenüber einer äquatorialen Ebene (EP) des Reifens (10) um einen Winkel (θ₂) geneigt ist, der einen Absolutwert von 5 bis 15 Grad hat, und die Länge jeder Verstärkung in der dritten Gurtlage (22₃) erstreckt sich in einer Richtung, die gegenüber der äquatorialen Ebene (EP) des Reifens (10) um einen Winkel (θ₃) geneigt ist,
die dritte Gurtlage (22₃) ist radial nach außen sowohl von der ersten Gurtlage (22₁) als auch von der zweiten Gurtlage (22₂) angeordnet, und im vulkanisierten Reifen ist die Breite (W₂) der zweiten Gurtlage (22₂) kleiner als die Breite (W₁) der ersten Gurtlage (22₁) und die Breite (W₃) der dritten Gurtlage (22₃),
**dadurch gekennzeichnet, dass**
der Winkel (θ₁) gleich einem Absolutwert von 24 bis 28 Grad ist,
der Winkel (θ₃) gleich einem Absolutwert von 24 bis 28 Grad ist, und
im vulkanisierten Reifen (10) die Breite (W₃) der dritten Gurtlage (22₃) größer als die Breite (W₁) der ersten Gurtlage (22₁) ist.

5. Verfahren nach Anspruch 4, wobei der Winkel (θ₂), um den die Länge jeder Verstärkung in der zweiten Gurtlage (22₂) sich gegenüber der äquatorialen Ebene (EP) des Reifens (10) erstreckt, einen Absolutwert von 7 bis 15 Grad hat.

6. Verfahren nach Anspruch 5, wobei der Winkel (θ₂), um den die Länge jeder Verstärkung in der zweiten Gurtlage (22₂) sich gegenüber der äquatorialen Ebene (EP) des Reifens (10) erstreckt, einen Absolutwert im Wesentlichen gleich 10 Grad hat.

7. Verfahren nach einem der Ansprüche 4 bis 6,
wobei im Schritt des Anordnens des Gurtes (20) entlang der Reifenkarkasse (15) die Reifenkarkasse (15) sich in einem aufgeweiteten Zustand befindet, und
wobei der Gurt (20) entlang der Reifenkarkasse (15) dadurch gebildet wird, dass zuerst die erste Gurtlage (22₁) auf die Reifenkarkasse (15) aufgebracht wird, dann anschließend die zweite Gurtlage (22₂) und dann die dritte Gurtlage (22₃).

8. Verfahren nach einem der Ansprüche 4 bis 6, wobei im Schritt des Anordnens der Winkel für jede Verstärkung in jeder der drei Gurtlagen (22₁, 22₂, 22₃) größer als der Winkel für jede Verstärkung in jeder der drei Gurtlagen (22₁, 22₂, 22₃) im vulkanisierten Reifen (10) ist.

9. Verfahren nach einem der Ansprüche 4 bis 8, wobei jede der drei (22₁, 22₂, 22₃) in eine konturierte Form des zentralen Teils (17) der Reifenkarkasse (15) gesteppt wird.

10. Verfahren nach Anspruch 9, wobei beim Schritt des Bereitstellens die Reifenkarkasse (15) unvulkanisiert ist, und wobei beim Schritt des Anordnens der Gurt (20) unvulkanisiert ist.

## Revendications

1. Bandage pneumatique vulcanisé (10), comprenant :
une carcasse (15) du pneu, ayant une ou plusieurs couches de corps (16), s'étendant entre une paire de talons (18), espacés dans une direction axiale (A) du pneu (10) ;
une ceinture, agencée le long de la carcasse (15) du pneu entre la paire de talons (18), la ceinture (20) ayant trois couches formant ceinture (22₁, 22₂, 22₃) comprenant une deuxième couche formant ceinture (22₂), agencée entre une première couche formant ceinture (22₁) et une troisième couche formant ceinture (22₃), chacune des trois couches formant ceinture (22₁, 22₂, 22₃) ayant une longueur qui s'étend dans une direction circonférentielle du pneu (10) et une largeur qui s'étend dans la direction axiale (A) du pneu (10), chacune des trois couches formant ceinture (22₁, 22₂, 22₃) comportant une pluralité de renforcement allongés (24), espacés au moins partiellement dans la largeur de la couche formant ceinture respective et ayant une longueur de renforcement qui s'étend au moins partiellement dans la direction de la longueur de la couche formant ceinture respective,
où la longueur de chaque renforcement dans la première couche formant ceinture (22₁) s'étend dans une direction, inclinée depuis un plan équatorial (EP) du pneu (10) suivant un angle (θ₁), la longueur de chaque renforcement dans la deuxième couche formant ceinture (22₂) s'étend dans une direction, inclinée depuis un plan équatorial (EP) du pneu (10) suivant un angle (θ₂) ayant une valeur absolue de 5 à 15 degrés et la longueur de chaque renforcement dans la troisième couche formant ceinture (22₃) s'étend dans une direction, inclinée depuis le plan équatorial (EP) du pneu (10) suivant un angle (θ₃),
la troisième couche formant ceinture (22₃) est agencée radialement, à l'extérieur de chaque couche parmi la première couche formant ceinture (22₁) et la deuxième couche formant ceinture (22₂) et la largeur (W₂) de la deuxième couche formant ceinture (22₂) est inférieure à la largeur (W₁) de la première couche formant ceinture (22₁) et à la largeur (W₃) de la troisième couche formant ceinture (22₃),
**caractérisé en ce que**
ledit angle (θ₁) est égal à une valeur absolue de 24 à 28 degrés,
ledit angle (θ₃) est égal à une valeur absolue de 24 to 28 degrés et
la largeur (W₃) de la troisième couche formant ceinture (22₃) est supérieure à la largeur (W₁) de la première couche formant ceinture (22₁).

2. Pneu (10) selon la revendication 1, ou l'angle (θ₂), suivant lequel la longueur de chaque renforcement dans la deuxième couche formant ceinture (22₂) s'étend depuis le plan équatorial (EP) du pneu (10), a une valeur absolue de 7 à 15 degrés.

3. Pneu (10) selon la revendication 1, ou l'angle (θ₂), suivant lequel la longueur de chaque renforcement dans la deuxième couche formant ceinture (22₂) s'étend depuis le plan équatorial (EP) du pneu (10), a une valeur absolue égale à sensiblement 10 degrés.

4. Procédé de formation d'un bandage pneumatique vulcanisé (10), le procédé comprenant les opérations, consistant à :
prévoir une carcasse (15) du pneu, ayant une ou plusieurs couches de corps (16), s'étendant entre une paire de talons (18), espacés dans une direction axiale (A) du pneu (10) ;
agencer une ceinture (20) le long d'une partie centrale (17) de la carcasse du pneu (15) entre la paire de talons (18), la ceinture (20) ayant trois couches formant ceinture (22₁, 22₂, 22₃), comprenant une deuxième couche formant ceinture (22₂), agencée entre une première couche formant ceinture (22₁) et une troisième couche formant ceinture (22₃), chacune des trois couches formant ceinture (22₁, 22₂, 22₃) ayant une longueur qui s'étend dans une direction circonférentielle du pneu (10) et une largeur qui s'étend dans la direction axiale (A) du pneu (10), chacune des trois couches formant ceinture (22₁, 22₂, 22₃) comportant une pluralité de renforcements allongés (24), espacés au moins partiellement dans la largeur de la couche formant ceinture respective et ayant une longueur de renforcement qui s'étend au moins partiellement dans la direction de la longueur de la couche formant ceinture respective ;
vulcaniser la ceinture (20) sur la carcasse (15) du pneu, pour former un pneu vulcanisé (10), où, dans le pneu vulcanisé (10), la longueur de chaque renforcement dans la première couche formant ceinture (22₁) s'étend dans une direction, inclinée depuis un plan équatorial (EP) du pneu (10) suivant un angle (θ₁), la longueur de chaque renforcement dans la deuxième couche formant ceinture (22₂) s'étend dans une direction, inclinée depuis un plan équatorial (EP) du pneu (10) suivant un angle (θ₂) ayant une valeur absolue de 5 à 15 degrés et la longueur de chaque renforcement dans la troisième couche formant ceinture (22₃) s'étend dans une direction, inclinée depuis le plan équatorial (EP) du pneu (10) suivant un angle (θ₃),
la troisième couche formant ceinture (22₃) est agencée radialement, à l'extérieur de chaque couche parmi la première couche formant ceinture (22₁) et la deuxième couche formant ceinture (22₂) et, dans le pneu vulcanisé, la largeur (W₂) de la deuxième couche formant ceinture (22₂) est inférieure à la largeur (W₁) de la première couche formant ceinture (22₁) et à la largeur (W₃) de la troisième couche formant ceinture (22₃),
**caractérisé en ce que**
ledit angle (θ₁) est égal à une valeur absolue de 24 à 28 degrés,
ledit angle (θ₃) est égal à une valeur absolue de 24 to 28 degrés et,
dans le pneu vulcanisé (10), la largeur (W₃) de la troisième couche formant ceinture (22₃) est supérieure à la largeur (W₁) de la première couche formant ceinture (22₁).

5. Procédé selon la revendication 4, où l'angle (θ₂), par lequel la longueur de chaque renforcement dans la deuxième couche formant ceinture (22₂) s'étend depuis le plan équatorial (EP) du pneu (10), a une valeur absolue de 7 à 15 degrés.

6. Procédé selon la revendication 5, où l'angle (θ₂), par lequel la longueur de chaque renforcement dans la deuxième couche formant ceinture (22₂) s'étend depuis le plan équatorial (EP) du pneu (10), a une valeur absolue égale à sensiblement 10 degrés.

7. Procédé selon l'une quelconque des revendications 4 à 6,
où, dans l'étape, consistant à agencer la ceinture (20) le long de la carcasse (15) du pneu, la carcasse (15) du pneu est dans un état élargi et
où la ceinture (20) est formée le long de la carcasse (15) du pneu en appliquant d'abord la première couche formant ceinture (22₁) à la carcasse (15) du pneu puis en appliquant ensuite la deuxième couche formant ceinture (22₂) et puis la troisième couche formant ceinture (22₃).

8. Procédé selon l'une quelconque des revendications 4 à 6, où, dans l'étape d'agencement, l'angle de chaque renforcement dans chacune des trois couches formant ceinture (22₁, 22₂, 22₃) est supérieur à l'angle de chaque renforcement dans chacune des trois couches formant ceinture (22₁, 22₂, 22₃) dans le pneu vulcanisé (10).

9. Procédé selon l'une quelconque des revendications 4 à 8, où chacune des trois couches formant ceinture (22₁, 22₂, 22₃) est cousue sur une forme profilée de la partie centrale (17) de la carcasse (15) du pneu.

10. Procédé selon la revendication 9, où, dans l'étape de prévision, la carcasse (15) du pneu est non-vulcanisée et où, dans l'étape d'agencement, la ceinture (20) est non-vulcanisée.
